(19) **Europäisches Patentamt**

**European Patent Office**

**Office européen des brevets**

(11) **EP 1 674 504 A1**

(12) **EUROPEAN PATENT APPLICATION**

(43) Date of publication:
**28.06.2006 Bulletin 2006/26**

(51) Int Cl.:
*C08J 5/18* (2006.01)

(21) Application number: **04106830.5**

(22) Date of filing: **22.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **TOTAL PETROCHEMICALS RESEARCH FELUY**
**7181 Seneffe (Feluy) (BE)**

(72) Inventors:
- **Stephenne, Vincent**
  **B-1330, Rixensart (BE)**
- **Maziers, Eric**
  **B-7180, Seneffe (BE)**
- **Slawinski, Martine**
  **B-9300, Aalst (BE)**
- **Miserque, Olivier**
  **B-1435, Mont-Saint-Guibert (BE)**

(54) **Geo-membrane applications**

(57) The resent invention discloses geo-membrane applications having good processability, high stress crack resistance, good tensile properties and high impact toughness prepared with a bimodal medium density polyethylene resin.

EP 1 674 504 A1

**Description**

The present invention relates to the field of geo-membranes prepared with bimodal medium density polyethylene resins.

Polyethylene resins prepared with Ziegler-Natta (ZN) catalyst systems are generally used for preparing geo-membrane applications. These resins such as for example Dowlex® 2342M or Stamylan® LL0132H200 have a reasonably high stress crack resistance, tensile properties, impact toughness and good processability, but they leave room for improvement.

Metallocene-prepared resins having a narrow monomodal polydispersity index have also been tested in that field but they have proven to lack the required balance of environmental stress crack and processing properties. In the field of geo-membrane applications stress crack resistance of over 400 h is required simultaneously with good processability. In this description, the polydispersity index D is defined as the ratio Mw/Mn of the weight average molecular weight Mw over the number average molecular weight Mn.

There is thus a need to prepare resins that can be used to produce geo-membrane applications.

It is an aim of the present invention to geo-membrane applicatons that have high environmental stress crack resistance.

It is also an aim of the present invention to produce geo-membrane applicatons with a resin that is easy to process by flat sheet extrusion or by blown sheet extrusion.

It is another aim of the present invention to provide geo-membrane applicatons having good tensile properties.

It is a further aim of the present invention to provide geo-membrane applicatons having high impact toughness.

It is yet a further aim of the present invention to provide geo-membranes applications that have good resistance to tear and puncture.

Accordingly, the present invention provides geo-membrane applications produced by flat sheet extrusion or by blown sheet extrusion with a bimodal medium density polyethylene (MDPE) resin.

In this invention, flat sheet extrusion is preferred.

The bimodal HDPE resin can be prepared from a physical blend or from a chemical blend. The chemical blend can result for example from a single catalysts system used in a double loop reactor wherein the loops are operated under different polymerisation conditions or from two or more catalyst systems used in a single or in a double loop reactor.

When a double loop reactor is used, it can be operated under three modes:

- hydrogen split wherein different concentrations of hydrogen are used in the different reactors in order to produce a low molecular weight fraction in a reactor and wherein the polydispersity is broadened in the other reactor;
- comonomer split wherein different comonomer concentrations are used in the different reactors in order to produce a low comonomer concentration in a reactor and a high comonomer concentration in the other reactor;
- comonomer/hydrogen split wherein a high molecular weight and high comonomer concentration is produced in one reactor and a low molecular weight, low comonomer concentratrion is produced in the second reactor. In the direct configuration, the high comonomer concentration is produced in the first reactor and vice versa, in the inverse configuration, the low comonomer concentration is produced in the first reactor.

The last mode in direct or inverse configuration is preferred in the present invention.

Preferably, the bimodal HDPE resin is prepared with a catalyst system based on a bridged bisindenyl metallocene catalyst component. The catalyst component is of general formula I

$$R'' (Ind)_2 MQ_2 \ (i)$$

wherein (Ind) is an indenyl or an hydrogenated indenyl, substituted or unsubstituted, R'' is a structural bridge between the two indenyls to impart stereorigidity that comprises a $C_1$-$C_4$ alkylene radical, a dialkyl germanium or silicon or siloxane, or a alkyl phosphine or amine radical, which bridge is substituted or unsubstituted; Q is a hydrocarbyl radical having from 1 to 20 carbon atoms or a halogen, and M is a transition metal Group 4 of the Periodic Table or vanadium.

Each indenyl or hydrogenated indenyl compound may be substituted in the same way or differently from one another at one or more positions in the cyclopentadienyl ring or in the cyclohexenyl ring and the bridge.

Each substituent on the indenyl may be independently chosen from those of formula $XR_v$ in which X is chosen from Group 14 of the Periodic Table, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or $CH_3$. More preferably, at least one and most preferably both cyclopentadienyl rings are unsubstituted.

In a particularly preferred embodiment, both indenyls are unsubstituted, and most preferably they are unsubstituted hydrogenated indenyls.

The most preferred metallocene catalyst component is isopropylidene-bis-tetrahydroindenyl zirconium dichloride.

The active catalyst system used for polymerising ethylene comprises the above-described catalyst component and a suitable activating agent having an ionising action.

Suitable activating agents are well known in the art.: they include aluminium alkyls aluminoxane or boron-based compounds.

Optionally, the catalyst component can be supported on a support.

This metallocene catalyst system is preferably used in a liquid full double loop reactor wherein the loops are operated under different conditions in order to produce a bimodal resin. The double loop reactor can be operated either in direct configuration wherein the copolymer is prepared in the first reactor or in inverse configuration wherein the homopolymer is prepared in the first reactor.

The bimodal resins of the present invention have a polydispersity index that is preferably larger than 3, more preferably from 3.1 to 3.5. The molecular weights are determined by GPC-DRI. In solution, long-branched polymers assume a more compact configuration than linear chains and their molecular weight can thus be slightly underestimated. The density is preferably of from 0.925 to 0.945 g/cm$^3$, preferably of from 0.934 to 0.938 g/cm$^3$ and the melt flow indices MI2 and HLMI are respectively ranging from 0.1 to 2 dg/min, preferably of from 0.5 to 1 dg/min and of from 5 to 30 dg/min.

The density is measured following the method of standard test ASTM 1505 at a temperature of 23 °C. The melt flow indices MI2 and HLMI are measured following the method of standard test ASTM D 1238 at a temperature of 190 °C and respectively under a load of 2.16 kg and 21.6 kg.

The methods used to prepare geo-membranes are either flat sheet extrusion or blown sheet extrusion. In both methods, the heart of the process is the extruder. Pellets are fed into the extruder typically by a screw system, they are then heated, placed under pressure and formed into a hot plastic mass before reaching the die. Once the components are in the hot plastic state, they can be formed either into a flat sheet by a dove tail die or into a cylindrical sheet that is subsequently cut and folded out into a flat sheet.

In the flat sheet extrusion process, the hot plastic mass is fed into a dove tail die and exits through a horizontal straight slit. Depending upon the width of the die, one or more extruders may be needed to feed the hot plastic mass into the die. High quality metal oilers placed in front of the slit are used to control the thickness and surface quality of the sheets. These rollers must be able to sustain pressure and temperature variations without deformation and they are connected to cooling liquids. The rollers are designed in order to control the sheet thickness to less than 3% variation over the whole width. A third roller may be used to further cool the sheet and to improve its surface finish. The surface finish of the sheet is directly proportional to the quality of the rollers' surface. The evenly cooled finished material is then fed over support rollers to be wrapped onto a core pipe and rolled up.

In the blown extrusion process the hot plastic mass is fed into a slowly rotating spiral die to produce a cylindrical sheet. Cooled air is blown into the centre of the cylinder creating a pressure sufficient to prevent its collapsing. The cylinder of sheeting is fed up vertically: it is then closed by being flattened over a series of rollers. After the cylinder is folded together, the sheet is cut and opened up to form a flat surface and then rolled up. The annular slit through which the cylinder sheet is formed is adjusted to control the sheet's thickness. Automatic thickness control is available in modern plants. Cooling is performed by the cool air blown into the centre of the cylinder and then during the rolling up process.

Coextrusion allows the combination of different materials into a single multi-layer sheet.

## List of Figures.

Figure 1 represents the molecular weight distribution of the resins tested.

Figure 2 represents the complex viscosity expressed in Pas as a function of frequency expressed in rad/s for several resins.

## Examples.

Several resins have been tested in the production of geo-membrane applications drinks.

They were selected as follows.

Resins R1 and R2 are monomodal medium density polyethylene (MDPE) resins prepared with isopropylidene-bis(tetrahydroindenyl) zirconium dichloride.

Resins R3 and R4 are bimodal MDPE resins prepared with isopropylidene-bis(tetrahydroindenyl) zirconium dichloride (THI) in a double loop reactor in direct configuration, i.e. wherein comonomer hexene is introduced into the first reactor and hydrogen is introduced into the second reactor.

Resin R5 is a Ziegler-Natta HDPE sold by Dow under the name Dowlex® 2342 M.

Resin R6 is a Ziegler-Natta HDPE sold by DSM under the name Stamylan® LL0132H200.

Their properties are summarised in Table I.

**TABLE I.**

| Resin | Density g/cm$^3$ | MI2 dg/min | HLMI dg/min | Mn kDa | Mw kDa | D |
|---|---|---|---|---|---|---|
| R1 | 0.934 | 0.9 | 25 | 32.1 | 74.9 | 2.6 |
| R2 | 0.933 | 0.2 | 10 | 41.2 | 106.3 | 2.6 |
| R3 | 0.934 | 0.4 | 19 | 30.8 | 93.7 | 3.0 |
| R4 | 0.934 | 0.5 | 20 | 27.7 | 96.4 | 3.5 |
| R5 | 0.937 | 0.89 | 24 | 24.6 | 115.7 | 4.7 |
| R6 | 0.935 | 0.74 | 20 | 28.3 | 117.5 | 4.2 |

For the bimodal polyethylene resins according to the present invention, different products were obtained in reactors Rx1 and Rx2 of the double loop system.

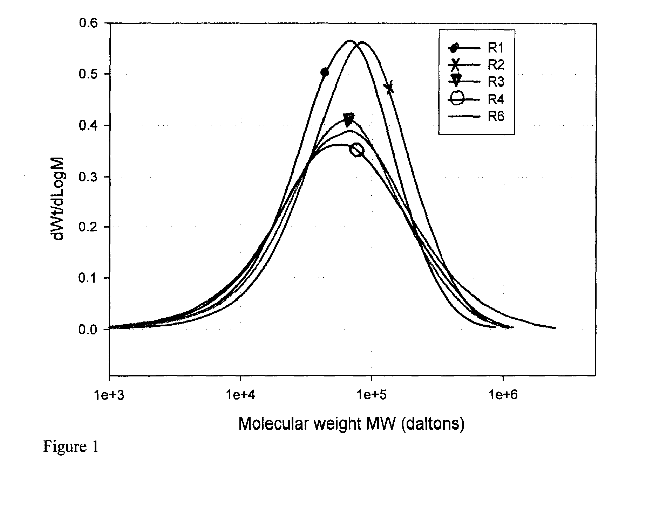

The curves representing the molecular weight distribution for all resins are represented in Figure 1. As expected, the molecular weight distribution of all the resins prepared with a Ziegler-Natta catalyst system are significantly broader than those of all the metallocene-prepared resins. In addition, they include very long chains that are characterised by a high molecular weight fraction above $10^6$ daltons. The metallocene-prepared resins, both monomodal and bimodal do not contain very long chains.

The molecular architecture of the resins has also been investigated and the amount of short chain branching and long chain branching has been evaluated for each resin.

The short chain branching (SCB) content was measured by NMR. The results for all resins are displayed in Table III as well as the nature of the short branches.

The long chain branching content was determined by the long chain branching index (LCBI). The method is described by Schroff R.N. and Mavridis H. in Macromolecules, 32, 8454 (1999) and LCBI is given by empirical formula

$$LCBI = \eta_0^{0.288} / 1.88 * [\eta] - 1$$

wherein $\eta_0$ is the zero shear viscosity expressed in Pa.s and $[\eta]$ is the intrinsic viscosity in solution expressed in g/mol. This method is more sensitive than the usual Dow Rheological Index (DRI) or NMR methods and is independent of the polydispersity. It was developed for substantially linear polyethylene such as typically obtained in metallocene catalysis and it only requires the measurement of intrinsic viscosity of a dilute polymer solution and the zero shear viscosity. It is equal to zero for linear chains and deviates from zero when long chain branching (LCB) is present. The intrinsic viscosity values were calculated from the Mark-Houwink relationship that was developed for linear chains and it must be noted that this method only applies to resins having a small content of long chain branching. The zero shear viscosity was obtained by Carreau-Yasada fitting. The results are displayed in Table II and they show that the resins prepared with Ziegler-Natta catalyst systems have no long chain branching and that the bimodal metallocene-prepared resins have the highest level of long chain branching.

**TABLE II.**

| Resin | Nature SCB | SCB content wt% | LCBI |
|---|---|---|---|
| R1 | butyl | 2.3 | 1.0 |
| R2 | butyl | 1.7 | >5 |
| R3 | butyl | 2.3 | 3.1 |
| R4 | butyl | 1.8 | 3.4 |
| R5 | hexyl | - | 0 |
| R6 | butyl | 3.5 | 0 |

It must be noted that for the bimodal resins according to the present invention that are prepared in a double loop reactor, the fluff exiting the first reactor had a higher content of long chain branching than the global product.

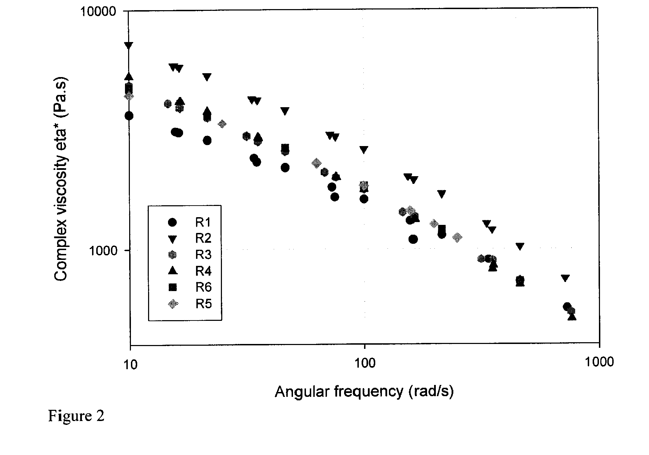

The complex viscosity curves as a function of angular frequency are presented in Figure 2. The viscosity curves were analysed with a laboratory-scale rheometre at the end of the extruder. The bimodal polyethylene resins of the present invention were characterised by a higher zero-shear viscosity than the Ziegler-Natta polyethylene (ZNPE) resins or the monomodal mPE because of the presence of LCB. At high angular frequencies, the viscosity curves for all resins were very similar, implying similar outputs at the end of the extruder as seen in Figure 2.

The processability of resin R3 according to the present invention was also tested in a flat sheet extrusion process under two different processing conditions.

A. Preparation of sheets having a thickness of 1.5 mm with resins R1 to R3.

Temperature profile: 200/210/220/230/230 °C
Apparent shear rate of about 100 s-1
Rollers temperature: 60 °C
Stretching rate: 1.33
Targeted output rate: 95 kg/h

The real output rates Q are reported in Table III. It can be observed that output target was reached for resins R1 and R3, but not for resin R2 characterised by a higher viscosity than resins R1 and R3 as seen in Figure 2. The thickness control and surface smoothness were excellent for resin r3 according to the present invention.

B. Preparation of sheets having a thickness of 2.5 mm with resin R3.

Temperature profile: 230/230/230/230/230 °C
Apparent shear rate of about 100 s-1
Rollers temperature: 70 °C
Stretching rate: 1.12
Targeted and real output rate: 145 kg/h.

**TABLE III.**

| Resin | R1 | R2 | R3 |
|---|---|---|---|
| Q (kg/h) | 95 | 85 | 95 |
| Melt temperature (°C) | 240 | 244 | 240 |
| Melt pressure (bars) | 157 | 200 | 166 |
| Thickness control | + | + | + |
| Surface smoothness | + | +/- | + |
| ESCR | - | + | + |
| processability | + | - | + |

Mechanical tests routinely performed in the field of geo-membrane applications were carried out on compression moulded specimens.

Stress crack resistance was evaluated following the Single Point Notched Constant Tensile Load (SPNCTL). The test uses a notched dumb-bell-shaped specimen to determine the resistance of material to brittle fractures caused by long-term, low-level tensile stress. The test following the method of standard test ASTM D 5397 requires that the specimens be placed in a surfactant solution, selected here as an lpegal 10 % solution, at a temperature of 50 °C, for an extended period of time, and be subject to a tensile stress equal to 15 % of the material's yield stress. In the field of geo-membrane applications, failure may not occur before at least 400 hours of exposure. Results for the mean failure time are presented in Table IV.

**TABLE IV.**

| Resin | Failure time (h) |
|-------|------------------|
| R1 | 64 |
| R2 | >400 |
| R3 | >1000 |
| R4 | >400 |
| R5 | >400 |
| R6 | >400 |

Bimodal metallocene-prepared polyethylene resins produce a dramatic improvement over the monomodal mPE. They are comparable to and often better than the reference ZNPE generally used in the field. Increasing the molecular weight and the content of small chain branching led to the observed increase in stress crack resistance. Long molecules are more likely to have a high content of tie molecules and a high efficiency in tie molecule entanglement and anchoring in the crystalline lamellae, thereby increasing the stress crack resistance. Incorporation of comonomer also contributes to increasing the content of tie molecule and tie molecule entanglement. In addition, metallocene catalyst systems provide a very homogeneous distribution of short chain branching on the longest molecules.

Tensile properties were evaluated following the method of standard test ASTM D 638 that gives information on the yield strength $\sigma_y$, the elongation at yield $\varepsilon_y$, the break strength $\sigma_B$ and the elongation at break $\varepsilon_B$. The results are presented in Table V together with the Young modulus.

**TABLE V.**

| Resin | $\sigma_y$ (Mpa) | $\varepsilon_y$ (%) | $\sigma_B$ (Mpa) | $\varepsilon_B$ (%) | $E_{Young}$ (Mpa) |
|-------|------------------|---------------------|------------------|---------------------|-------------------|
| R1 | 17.0 | 11.5 | 24.0 | 675 | 596 |
| R2 | 17.0 | 12.5 | - | >752 | 563 |
| R3 | 17.0 | 11.5 | 28.0 | 764 | 596 |
| R4 | 18.5 | 11.0 | 20.5 | 655 | 666 |
| R6 | 17.5 | 12.5 | 33.5 | 795 | 573 |

The tensile properties are at least maintained and improved in some cases for the bimodal resins according to the present invnetion.

**Claims**

1. Geo-membrane applications produced by flat sheet extrusion or by blown sheet extrusion with bimodal medium density polyethylene (MDPE) resins.

2. The geo-membranes applications of claim 1 wherein the MDPE resin is prepared with a metallocene catalyst system in a double loop reactor.

3. The geo-membranes applications of claim 2 wherein the metallocene catalyst system is based on a bis-indenyl catalyst component.

4. The geo-membranes applications of claim 3 wherein the bis-indenyl catalyst component is a bis-tetrahydro-indenyl catalyst component.

5. Use of a bimodal medium density polyethylene resin having high molecular weight, high level of short chain branching and optimised distribution of short chain branches to prepare geo-membrane applications having good processability, high stress crack resistance, good tensile properties and high impact toughness.

**6.** The use of claim 5 wherein the bimodal MDPE is prepared by physical blending.

**7.** The use of claim 5 wherein the bimodal MDPE is prepared by chemical blending.

Figure 1

Figure 2

**European Patent Office**

**EUROPEAN SEARCH REPORT**

Application Number

EP 04 10 6830

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99/10415 A (THE DOW CHEMICAL COMPANY; BABB, DAVID, A; HOENIG, WENDY, D; KAO, CHE-I) 4 March 1999 (1999-03-04) | 1,2,5-7 | C08J5/18 |
| Y | * page 1, line 16 - page 5, line 37 * <br> * page 28, line 10 - page 35, line 36 * <br> ----- | 3,4 | |
| X | US 6 521 306 B1 (HOENIG WENDY D ET AL) 18 February 2003 (2003-02-18) | 1,5-7 | |
| Y | * column 1, line 7 - column 4, line 49; claims * <br> ----- | 2-4 | |
| X | US 6 649 698 B1 (MEHTA SAMEER D) 18 November 2003 (2003-11-18) <br> * column 1, line 5 - line 57; claims 17-19 * <br> ----- | 1,5 | |
| Y | EP 1 319 685 A (ATOFINA RESEARCH) 18 June 2003 (2003-06-18) <br> * paragraph [0001] - paragraph [0030] * <br> ----- | 2-4,6 | |
| Y | EP 1 201 713 A (ATOFINA RESEARCH; SOLVAY POLYOLEFINS EUROPE - BELGIUM) 2 May 2002 (2002-05-02) <br> * paragraph [0001] - paragraph [0041] * <br> ----- | 2-4,6 | **TECHNICAL FIELDS SEARCHED (Int.Cl.7)** <br> C08L <br> C08F <br> C08J <br> B29D |
| Y | US 2004/204547 A1 (DHARMARAJAN RAJA N ET AL) 14 October 2004 (2004-10-14) <br> * paragraph [0001] - paragraph [0029] * <br> ----- | 3,4 | |
| A | US 5 736 237 A (RHEE ET AL) 7 April 1998 (1998-04-07) <br> * column 1, line 4 - column 3, line 15; claim 6 * <br> ----- | 2,6,7 | |
| A | WO 2004/026921 A (EXXONMOBIL CHEMICAL PATENTS INC; BRANT, PATRICK; LUFT, GERHARD, FRANZ;) 1 April 2004 (2004-04-01) <br> * paragraph [0002] - paragraph [0011] * <br> ----- | 2 | |

The present search report has been drawn up for all claims

| Place of search | Date of completion of the search | Examiner |
|---|---|---|
| Munich | 14 April 2005 | Kopp, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 10 6830

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2005

| Patent document cited in search report | | Publication date | Patent family member(s) | | | Publication date |
|---|---|---|---|---|---|---|
| WO 9910415 | A | 04-03-1999 | AT | 239048 | T | 15-05-2003 |
| | | | AT | 251199 | T | 15-10-2003 |
| | | | AU | 743240 | B2 | 24-01-2002 |
| | | | AU | 8688198 | A | 16-03-1999 |
| | | | AU | 8688298 | A | 16-03-1999 |
| | | | AU | 8688398 | A | 16-03-1999 |
| | | | AU | 8828398 | A | 16-03-1999 |
| | | | AU | 747212 | B2 | 09-05-2002 |
| | | | AU | 8920898 | A | 16-03-1999 |
| | | | AU | 743302 | B2 | 24-01-2002 |
| | | | AU | 8921098 | A | 16-03-1999 |
| | | | BR | 9814442 | A | 04-12-2001 |
| | | | BR | 9814447 | A | 02-10-2001 |
| | | | BR | 9814451 | A | 03-10-2000 |
| | | | CA | 2300924 | A1 | 04-03-1999 |
| | | | CA | 2301527 | A1 | 04-03-1999 |
| | | | CA | 2301602 | A1 | 04-03-1999 |
| | | | CA | 2301644 | A1 | 04-03-1999 |
| | | | CA | 2301835 | A1 | 04-03-1999 |
| | | | CA | 2301836 | A1 | 04-03-1999 |
| | | | CN | 1271371 | A ,C | 25-10-2000 |
| | | | CN | 1273592 | A | 15-11-2000 |
| | | | CN | 1275996 | A | 06-12-2000 |
| | | | CN | 1276811 | A | 13-12-2000 |
| | | | DE | 69814098 | D1 | 05-06-2003 |
| | | | DE | 69814098 | T2 | 26-02-2004 |
| | | | DE | 69818686 | D1 | 06-11-2003 |
| | | | DE | 69818686 | T2 | 22-04-2004 |
| | | | EP | 1007585 | A1 | 14-06-2000 |
| | | | EP | 1007586 | A1 | 14-06-2000 |
| | | | EP | 1007587 | A1 | 14-06-2000 |
| | | | EP | 1007583 | A1 | 14-06-2000 |
| | | | EP | 1007589 | A1 | 14-06-2000 |
| | | | EP | 1007590 | A1 | 14-06-2000 |
| | | | ES | 2192783 | T3 | 16-10-2003 |
| | | | HU | 0002756 | A2 | 28-12-2000 |
| | | | ID | 25634 | A | 19-10-2000 |
| | | | JP | 2001514284 | T | 11-09-2001 |
| | | | JP | 2001514287 | T | 11-09-2001 |
| | | | JP | 2001514288 | T | 11-09-2001 |
| | | | JP | 2001514289 | T | 11-09-2001 |
| | | | JP | 2001514292 | T | 11-09-2001 |
| | | | JP | 2001514293 | T | 11-09-2001 |
| | | | NO | 20000966 | A | 25-04-2000 |
| | | | PL | 339083 | A1 | 04-12-2000 |
| | | | TR | 200000516 | T2 | 22-01-2001 |

For more details about this annex : see Official Journal of the European Patent Office, No. 12/82

**ANNEX TO THE EUROPEAN SEARCH REPORT
ON EUROPEAN PATENT APPLICATION NO.** EP 04 10 6830

This annex lists the patent family members relating to the patent documents cited in  the above-mentioned European search report.
The members are as contained in the European Patent Office EDP file on
The European Patent Office is in no way liable for these particulars which are merely  given for the purpose of information.

14-04-2005

| Patent document cited in search report | | Publication date | Patent family member(s) | | Publication date |
|---|---|---|---|---|---|
| WO 9910415 | A | | TR | 200000905 T2 | 21-07-2000 |
| | | | TR | 200001175 T2 | 21-08-2000 |
| | | | TW | 584641 B | 21-04-2004 |
| | | | TW | 588059 B | 21-05-2004 |
| US 6521306 | B1 | 18-02-2003 | AT | 239048 T | 15-05-2003 |
| | | | AT | 251199 T | 15-10-2003 |
| | | | AU | 743240 B2 | 24-01-2002 |
| | | | AU | 8688198 A | 16-03-1999 |
| | | | AU | 8688298 A | 16-03-1999 |
| | | | AU | 8688398 A | 16-03-1999 |
| | | | AU | 8828398 A | 16-03-1999 |
| | | | AU | 747212 B2 | 09-05-2002 |
| | | | AU | 8920898 A | 16-03-1999 |
| | | | AU | 743302 B2 | 24-01-2002 |
| | | | AU | 8921098 A | 16-03-1999 |
| | | | BR | 9814442 A | 04-12-2001 |
| | | | BR | 9814447 A | 02-10-2001 |
| | | | BR | 9814451 A | 03-10-2000 |
| | | | CA | 2300924 A1 | 04-03-1999 |
| | | | CA | 2301527 A1 | 04-03-1999 |
| | | | CA | 2301602 A1 | 04-03-1999 |
| | | | CA | 2301644 A1 | 04-03-1999 |
| | | | CA | 2301835 A1 | 04-03-1999 |
| | | | CA | 2301836 A1 | 04-03-1999 |
| | | | CN | 1271371 A ,C | 25-10-2000 |
| | | | CN | 1273592 A | 15-11-2000 |
| | | | CN | 1275996 A | 06-12-2000 |
| | | | CN | 1276811 A | 13-12-2000 |
| | | | DE | 69814098 D1 | 05-06-2003 |
| | | | DE | 69814098 T2 | 26-02-2004 |
| | | | DE | 69818686 D1 | 06-11-2003 |
| | | | DE | 69818686 T2 | 22-04-2004 |
| | | | EP | 1007585 A1 | 14-06-2000 |
| | | | EP | 1007586 A1 | 14-06-2000 |
| | | | EP | 1007587 A1 | 14-06-2000 |
| | | | EP | 1007583 A1 | 14-06-2000 |
| | | | EP | 1007589 A1 | 14-06-2000 |
| | | | EP | 1007590 A1 | 14-06-2000 |
| | | | ES | 2192783 T3 | 16-10-2003 |
| | | | HU | 0002756 A2 | 28-12-2000 |
| | | | ID | 25634 A | 19-10-2000 |
| | | | JP | 2001514284 T | 11-09-2001 |
| | | | JP | 2001514287 T | 11-09-2001 |
| | | | JP | 2001514288 T | 11-09-2001 |
| | | | JP | 2001514289 T | 11-09-2001 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 04 10 6830

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2005

| Patent document cited in search report | | Publication date | Patent family member(s) | | Publication date |
|---|---|---|---|---|---|
| US 6521306 | B1 | | JP 2001514292 T | | 11-09-2001 |
| | | | JP 2001514293 T | | 11-09-2001 |
| | | | NO 20000966 A | | 25-04-2000 |
| | | | PL 339083 A1 | | 04-12-2000 |
| | | | TR 200000516 T2 | | 22-01-2001 |
| | | | TR 200000905 T2 | | 21-07-2000 |
| | | | TR 200001175 T2 | | 21-08-2000 |
| | | | TW 584641 B | | 21-04-2004 |
| US 6649698 | B1 | 18-11-2003 | AU 2003234732 A1 | | 12-12-2003 |
| | | | WO 03099922 A1 | | 04-12-2003 |
| EP 1319685 | A | 18-06-2003 | EP 1319685 A1 | | 18-06-2003 |
| | | | AU 2002361404 A1 | | 30-06-2003 |
| | | | WO 03051937 A1 | | 26-06-2003 |
| | | | EP 1470166 A1 | | 27-10-2004 |
| EP 1201713 | A | 02-05-2002 | EP 1201713 A1 | | 02-05-2002 |
| | | | AU 2066402 A | | 06-05-2002 |
| | | | CN 1476464 A | | 18-02-2004 |
| | | | WO 0234829 A1 | | 02-05-2002 |
| | | | EP 1328580 A1 | | 23-07-2003 |
| | | | HU 0302730 A2 | | 28-11-2003 |
| | | | JP 2004512410 T | | 22-04-2004 |
| | | | NO 20031879 A | | 02-06-2003 |
| | | | PL 361619 A1 | | 04-10-2004 |
| | | | US 2004181010 A1 | | 16-09-2004 |
| US 2004204547 | A1 | 14-10-2004 | WO 03033585 A1 | | 24-04-2003 |
| US 5736237 | A | 07-04-1998 | NONE | | |
| WO 2004026921 | A | 01-04-2004 | AU 2003270780 A1 | | 08-04-2004 |
| | | | AU 2003291627 A1 | | 08-04-2004 |
| | | | WO 2004026923 A2 | | 01-04-2004 |
| | | | WO 2004026921 A1 | | 01-04-2004 |
| | | | US 2004127654 A1 | | 01-07-2004 |
| | | | US 2004122191 A1 | | 24-06-2004 |

For more details about this annex : see Official Journal of the European Patent Office, No. 12/82